(19) Europäisches Patentamt
European Patent Office
Office européen des brevets

(11) **EP 0 833 085 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(51) Int Cl.⁷: **F16H 61/14**, F16H 61/00

(21) Anmeldenummer: **97115221.0**

(22) Anmeldetag: **03.09.1997**

(54) **Steuerverfahren für ein stufenlos verstellbares Getriebe mit einem hydraulischen Drehmomentwandler und Überbrückungskupplung**

Control system for a continuously varaiable transmission with an hydraulic torque converter and a lock-up clutch

Système de commande pour un variateur continu de vitesse avec un convertisseur de couple hydraulique et un embrayage de pontage

(84) Benannte Vertragsstaaten:
**DE FR GB IT**

(30) Priorität: **28.09.1996 DE 19640160**

(43) Veröffentlichungstag der Anmeldung:
**01.04.1998 Patentblatt 1998/14**

(73) Patentinhaber: **Volkswagen Aktiengesellschaft 38436 Wolfsburg (DE)**

(72) Erfinder: **Jahn, Detlef 38102 Braunschweig (DE)**

(74) Vertreter: **Hübsch, Dirk et al Hübsch & Weil Patent- und Rechtsanwaltskanzlei Ubierring 43 50678 Köln (DE)**

(56) Entgegenhaltungen:
**EP-A- 0 297 726    EP-A- 0 430 675
EP-A- 0 559 342    DE-A- 19 519 461
US-A- 5 417 621**

• **PATENT ABSTRACTS OF JAPAN vol. 97, no. 4, 30. April 1997 & JP 08 326891 A (NISSAN), 10. Dezember 1996**
• **PATENT ABSTRACTS OF JAPAN vol. 16, no. 129 (M-1228), 2. April 1992 & JP 03 292448 A (TOYOTA), 24. Dezember 1991**

**Beschreibung**

Die Erfindung betrifft ein Steuerverfahren für ein stufenlos verstellbares Getriebe mit einem hydraulischen Drehmomentwandler und einer Überbrückungskupplung für denselben, mit den weiteren Merkmalen der Oberbegriffe der Anspruche 1 bzw. 7.

Automatikgetriebe in Kraftfahrzeugen, und insbesondere stufenlos verstellbare Getriebe (mitunter auch mit der englischen Abkürzung CVT bezeichnet) werden üblicherweise mit einem hydraulischen Drehmomentwandler in Reihe geschaltet, um ein Anfahren zu ermöglichen. Der bei niedrigen Drehzahlen zum Anfahren benötigte hydraulische Drehmomentwandler stört bei höheren Geschwindigkeiten des Kraftfahrzeuges, da der in ihm erzeugte Schlupf mit Wirkungsgradverlusten einhergeht. Daher wird der hydraulische Drehmomentwandler bei höheren Geschwindigkeiten häufig durch eine Überbrückungskupplung überbrückt, die mit einem Wirkungsgrad von nahezu 1 arbeitet.

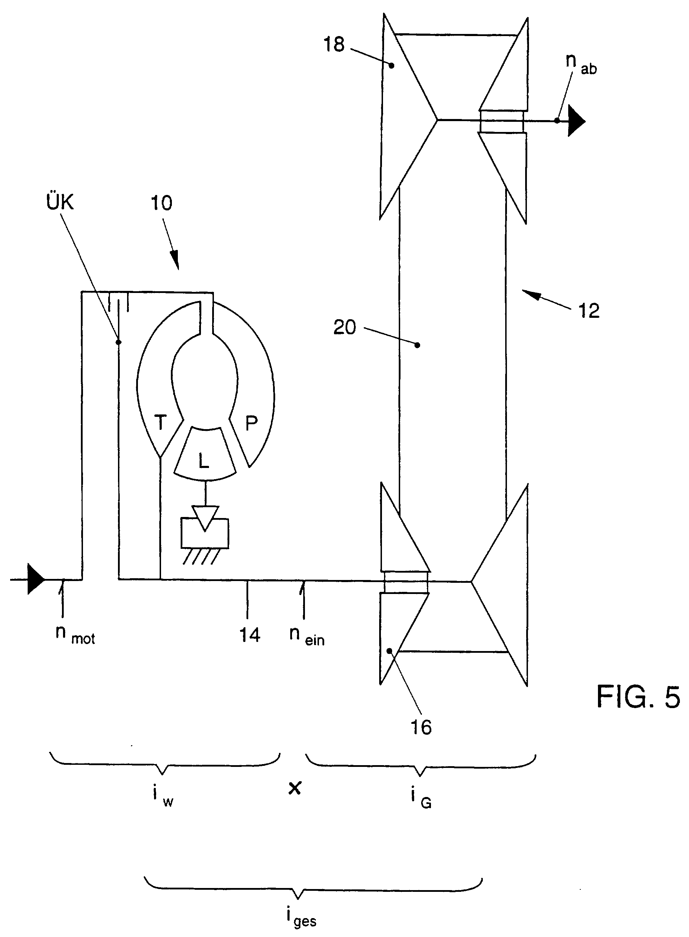

Figur 5 zeigt den prinzipiellen Aufbau eines herkömmlichen, aus Drehmomentwandler 10 und stufenlos verstellbarem Getriebe 12 bestehenden Triebstranges.

Ein nicht dargestellter Motor in Form einer herkömmlichen Brennkraftmaschine liefert eine Motordrehzahl $n_{mot}$ auf das Pumpenrad P des Drehmomentwandler 10. Das Turbinenrad T dreht sich mit einer Drehzahl $n_{ein}$ der Getriebeeingangswelle 14 des stufenlosen Getriebes 12.

Das stufenlose Getriebe 12 besteht in an sich bekannter Manier aus zwei Kegelscheibensätzen 16 und 18; zwischen denen ein Zugmittel, beispielsweise ein Keilriemen, oder ein Druckmittel, beispielsweise in Form einer Gliederkette, umläuft. Durch Verstellen der axialen Positionen des treibenden Scheibensatzes 16 ändert sich der wirksame treibende Durchmesser, wodurch sich bei gegebener Länge des Treibmittels 20 der entsprechende Abtriebsdurchmesser des getriebenen Scheibensatzes 18 einstellt.

Um den hydrodynamischen Drehmomentwandler zur Vermeidung seiner Verluste bei höheren Geschwindigkeiten überbrücken zu können, ist eine Überbrückungskupplung ÜK vorgesehen.

Die Überbrückungskupplung wird unter Berücksichtigung bestimmter Kriterien gesteuert einoder ausgekuppelt. Aus der deutschen Offenlegungsschrift DE 195 19 461 A1 ist bekannt, die Überbrückungskupplung einzukuppeln, wenn die Fahrzeuggeschwindigkeit eine vorbestimmte Fahrzeuggeschwindigkeit übertrifft und die Überbrückungskupplung dann wieder auszukuppeln, wenn die Fahrzeuggeschwindigkeit unter eine zweite festgesetzte Fahrzeuggeschwindigkeit fällt, welche niedriger ist, als die erstgenannte Fahrzeuggeschwindigkeit. Aus dieser Druckschrift lassen sich darüber hinaus zusätzliche Kriterien zum Einoder Auskuppeln der Überbrückungskupplung entnehmen, um Drehmomentstöße bei einer plötzlichen Leistungsanforderung vom Fahrer des Kraftfahrzeuges an den Motor, d.h. die Brennkraftmaschine, zu mildern.

Betrachtet man das Gesamt-Übersetzungsverhältnis des in Figur 5 dargestellten Triebstranges, so erkennt man, daß das Drehzahlübersetzungsverhältnis des Drehmomentwandlers mit dem Übersetzungsverhältnis des stufenlosen Getriebes multipliziert das Gesamt-Übersetzungsverhältnis ergibt. Für das Übersetzungsverhältnis des Drehmomentwandlers gilt:

$$i_w = \frac{n_{mot}}{n_{ein}}.$$

Wegen des Schlupfes des Drehmomentwandlers, der sich berechnet als

$$n_{schlupf} = n_{mot} - n_{ein}$$

ist das Drehzahlübersetzungsverhältnis des Drehmomentwandlers im Zugbetrieb immer größer als 1, d.h. $n_{mot}$ wird immer höher liegen als $n_{ein}$, d.h. die Drehzahl der Getriebeeingangswelle 14 des stufenlosen Getriebes.

Für das stufenlose Getriebe gilt

$$i_G = \frac{n_{ein}}{n_{ab}},$$

so daß sich für das Gesamtverhältnis ergibt

$$i_{ges} = i_w \cdot i_g = \frac{n_{mot}}{n_{ab}}.$$

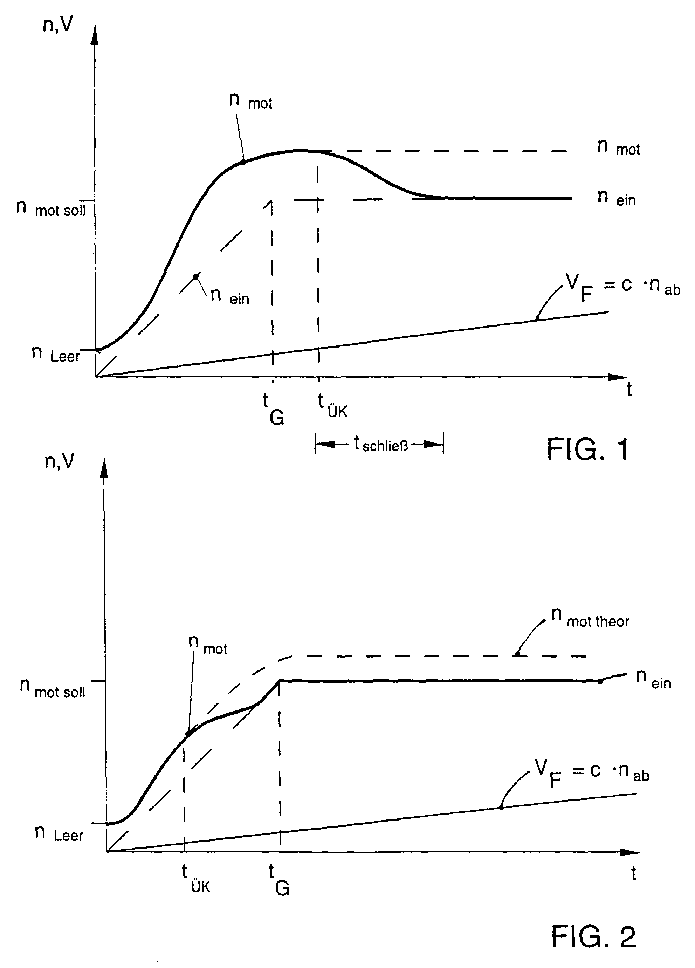

Figur 1 zeigt ein Diagramm eines beschleunigenden Kraftfahrzeuges, bei dem die Überbrückungskupplung gemäß dem Stand der Technik bei Überschreiten einer bestimmten Fahrzeuggeschwindigkeit geschlossen wird.

In Figur 1 ist auf der Abszisse die Zeit aufgetragen, auf der Ordinate Drehzahlen der verschiedenen Wellen oder die Fahrzeuggeschwindigkeit.

Wie die mit konstanter Steigung verlaufende Gerade zeigt, soll eine gleichmäßige Beschleunigung des Kraftfahrzeuges angenommen werden. Die Fahrzeuggeschwindigkeit $v_F$ steigt daher stetig an, sie ist direkt proportional zur Abtriebsdrehzahl des stufenlosen Getriebes 12, so daß gilt $v_F = c * n_{ab}$.

Gestrichelt dargestellt ist ein wünschenswerter Verlauf der Eingangsdrehzahl $n_{ein}$ des stufenlosen Getriebes. Die Eingangsdrehzahl und damit die Motordrehzahl soll kontinuierlich während des Beschleunigens des Fahrzeuges steigen, während das stufenlose Getriebe in der kürzesten Übersetzung $i_{max}$ geschaltet ist. Zum Zeitpunkt $t_G$ wird die Übersetzung des stufenlosen Getriebes in Richtung längerer Übersetzung verfahren, um ein weiteres Ansteigen der Motordrehzahl $n_{mot}$ zu verhindern. Man erkennt, daß die Motordrehzahl um den Schlupf $n_{schlupf} = n_{mot}$ - nein über einer gewünschten Motordrehzahl $n_{motsoll}$ liegt.

Bei Überschreiten eines festgesetzten Grenzwertes der Fahrzeuggeschwindigkeit $v_F$ wird die Überbrückungskupplung zum Zeitpunkt $t_{ÜK}$ zugefahren, so daß die Drehzahl des Motors $n_{mot}$ über den Schließzeitraum $t_{schließ}$ wegen des entfallenden Schlupfes des hydrodynamischen Drehmomentwandlers abfällt, bis $n_{mot} = n_{ein}$.

An diesem herkömmlichen Verfahren ist nachteilig, daß die Motordrehzahl $n_{mot}$ über den wünschenswerten Sollwert $n_{motsoll}$ hinausschwingt.

Figur 2 zeigt eine alternative Verfahrensvariante, die ebenfalls aus dem Stand der Technik bekannt ist.

Um das Überschwingen der Motordrehzahl $n_{mot}$ über die gewünschte Motordrehzahl $n_{motsoll}$, so wie in Figur 1 dargestellt, zu vermeiden, wird der Zeitpunkt $t_{ÜK}$, zu dem die Überbrückungskupplung geschlossen wird, früher gewählt. Die Überbrückungskupplung wird nun bereits geschlossen, während sich das stufenlose Getriebe noch in der kürzesten Übersetzung $i_{max}$ befindet. Man erkennt in Figur 2, daß die Drehzahl $n_{mot}$ beginnend von der Leerlaufdrehzahl $n_{leer}$ zunächst ansteigt und dann in der gezeichneten Form auf die Getriebeeingangsdrehzahl $n_{ein}$ zuläuft, die aber noch unter der Motorsolldrehzahl liegt.

Zum Zeitpunkt $t_G$ wird die Übersetzung des stufenlosen Getriebes stetig von $i_{max}$ in Richtung auf längere Übersetzung verfahren, so daß die Getriebeabtriebsdrehzahl und damit die Fahrzeuggeschwindigkeit weiter stetig ansteigen, obwohl die Getriebeeingangsdrehzahl $n_{ein}$ konstant bleibt.

Dabei sind in den Figuren 1 und 2 die Verhältnisse insoweit vereinfacht dargestellt, als der Schwund an Zugkraft bei sich änderndem Übersetzungsverhältnis des Getriebes und die sich damit ändernde Fahrzeugbeschleunigung nicht berücksichtigt worden ist.

Bei dem Verfahren gemäß Figur 2 ist nachteilig, daß nach Beginn des Einrückens der Überbrückungskupplung die Motorleistung wegen der sinkenden Drehzahl abfällt, so daß keine optimale Beschleunigung möglich ist.

Im Stand der Technik ist ein Steuer- bzw. Regelverfahren bekannt (EP 0 430 675 A2), bei dem einerseits die Motordrehzahl sowie die Drehzahl der Getriebeeingangswelle ermittelt wird. Aus der zeitlichen Änderung der Drehzahl der Getriebeeingangswelle wird die gewünschte zeitliche Änderung des Übersetzungsverhältnisses ermittelt. Sinn und Zweck dieses bekannten Steuer- oder Regelverfahrens ist es, einen Wechsel bzw. eine abrupte Veränderung der Motordrehzahl zu vermeiden. Hierbei wird aber die Motordrehzahl dennoch verändert. Dieses bekannte Verfahren verhindert dadurch "Spitzen" und gewährleistet eine gleichbleibende Veränderung der Motordrehzahl, ohne daß eine maximale Drehzahlbegrenzung realisiert ist. Dies ist nicht immer optimal.

Der Erfindung liegt daher die Aufgabe zugrunde, das bekannte Steuerungs- oder Regelverfahren für ein stufenloses Getriebe mit hydrodynamischem Wandler und Überbrückungskupplung derart auszugestalten und weiterzubilden, daß die Motordrehzahl - als Regelgröße - während eines Beschleunigungsvorganges im wesentlichen eine gewünschte Motordrehzahl nicht übersteigt.

Die Lösung ist erfindungsgemäß durch die Kombination der Merkmale des Patentanspruches 1 bzw. durch die Kombination der Merkmale des Patentanspruches 7 gegeben.

Weitere bevorzugte Ausführungsformen sind in den Unteransprüchen beschrieben.

Bevorzugt ist insbesondere vorgesehen, daß die Übersetzung des stetig verstellbaren Getriebes so verstellt wird, daß die gesamte Übersetzung von Motordrehzahl zu Getriebeabtriebsdrehzahl im wesentlich gleich bleibt. Während also bei herkömmlichen Verfahren der Wegfall des im Drehmomentwandler auftretenden Schlupfes dazu führt, daß die Motordrehzahl absinkt, ist vorgesehen, die Eingangsdrehzahl des stufenlosen Getriebes durch entsprechendes Nachstellen der Übersetzung des stufenlosen Getriebes kontinuierlich so anzuheben, daß die Motordrehzahl bei gegebener Fahrzeuggeschwindigkeit, d.h. gegebener Abtriebsdrehzahl des stufenlosen Getriebes, konstant bleibt.

Bevorzugt ist insbesondere vorgesehen, das Verfahren zu nutzen, um den Drehzahlverlauf der Motordrehzahl über der Zeit dem ideal gewünschten Drehzahlverlauf möglichst anzunähern. Dieser ideale Verlauf der Motordrehzahl und damit der Eingangsdrehzahl des stufenlosen Getriebes besteht darin, daß die gewünschte Solldrehzahl möglichst schnell erreicht und anschließend unverändert beibehalten wird, so wie dies in den Figuren 1 und 2 als wünschenswerter Verlauf eingezeichnet ist. Dies ist deshalb erwünscht, um die gewünschte Antriebsleistung schnell zu erhalten.

Es ist daher vorgesehen, daß ausgehend von dem kleinsten Übersetzungsverhältnis des stufenlosen Getriebes diese Übersetzung während des Beschleunigens beibehalten wird, bis die Drehzahl der Brennkraftmaschine eine Solldrehzahl erreicht, daß das Übersetzungsverhältnis des stufenlosen Getriebes dann kontinuierlich in Richtung auf längere Übersetzungverhältnisse verfahren wird, so daß trotz steigender Getriebeabtriebsdrehzahl die Motordrehzahl im wesentlichen gleich bleibt, und daß dann beim Schließen der Überbrückungskupplung die Übersetzung des stufenlosen Getriebes stetig wieder in Richtung kürzerer Übersetzungsverhältnisse verfahren wird, so daß die Motordrehzahl unter Berücksichtigung des entfallenden Schlupfes des Wandlers trotz steigender Getriebeabtriebsdrehzahl im wesentlichen konstant bleibt. Da beim Schließen der Überbrückungskupplung keine Motordrezahländerung auftritt, kann das Schließen sehr schnell und trotzdem für den Fahrer unmerklich vor sich gehen, was die Reibleistung an der Kupplung mindert.

Bevorzugt ist insbesondere, das Steuerverfahren dadurch zum Regelverfahren zu machen, daß die Übersetzung des stufenlos verstellbaren Getriebes als Stellgröße verwendet wird, um die (gemessene) Motordrehzahl als Regelgröße auf eine vorgegebene Motorsolldrehzahl zu regeln.

Dabei wird das einzustellende Übersetzungsverhältnis des stufenlosen Getriebes vorzugsweise nach folgender Beziehung berechnet:

$$i_G = \frac{\left(n_{soll} - \left(n_{mot} - n_{ein}\right)\right)}{n_{ab}}$$

Vorzugsweise umfaßt das Verfahren weiterhin die Bestimmung der Getriebeabtriebsdrehzahl, bei der die Überbrückungskupplung vorzugsweise einzukuppeln ist, um bei bekannter Schließzeit der Überbrückungskupplung einerseits zu erreichen, daß bei Ende des Schließvorganges die kürzeste Übersetzung des Getriebes eingestellt ist, um eine maximale Beschleunigung zu gewährleisten, und andererseits die in der Kupplung in Wärme umgesetzte Arbeit zu minimieren.

Dabei kann die Getriebeabtriebsdrehzahl, bei der der Schließvorgang der Überbrückungskupplung begonnen werden muß, bei bekannter Motorsolldrehzahl, bekannter Schließzeit der Kupplung vorteilhaft aus folgender Beziehung abgeleitet werden, wenn der Gradient, mit der sich die Getriebeabtriebsdrehzahl ändert, d.h. $dn_{ab}/dt$, bekannt ist oder zumindest geschätzt werden kann:

$$n_{soll} < \left(n_{ab} + \frac{dn_{ab}}{dt} * t_{schließ}\right) * i_{max}$$

Die Erfindung wird im folgenden anhand der Zeichnungen näher erläutert. In der Zeichnung zeigen:

Figur 1   eine schematische Darstellung der Drehzahl- und Geschwindigkeitsverläufe bei einem Steuerungsverfahren gemäß dem Stand der Technik,

Figur 2   eine Darstellung gemäß Figur 1, bei der der Kupplungszeitpunkt anders gewählt ist,

Figur 3   eine schematische Darstellung von Drehzahl- und Geschwindigkeitsverlauf des erfindungsgemäßen Verfahrens,

Figur 4   eine Darstellung gemäß Figur 3 einer alternativen Ausführungsform, und

Figur 5   eine schematische Darstellung eines gattungsgemäßen, aus Drehmomentwandler, Überbrückungskupplung und stufenlosem Getriebe (CVT) bestehenden Triebstranges bzw. Gesamtgetriebes.

Figur 1, Figur 2 und Figur 5 sind bereits in der Beschreibungseinleitung diskutiert worden.

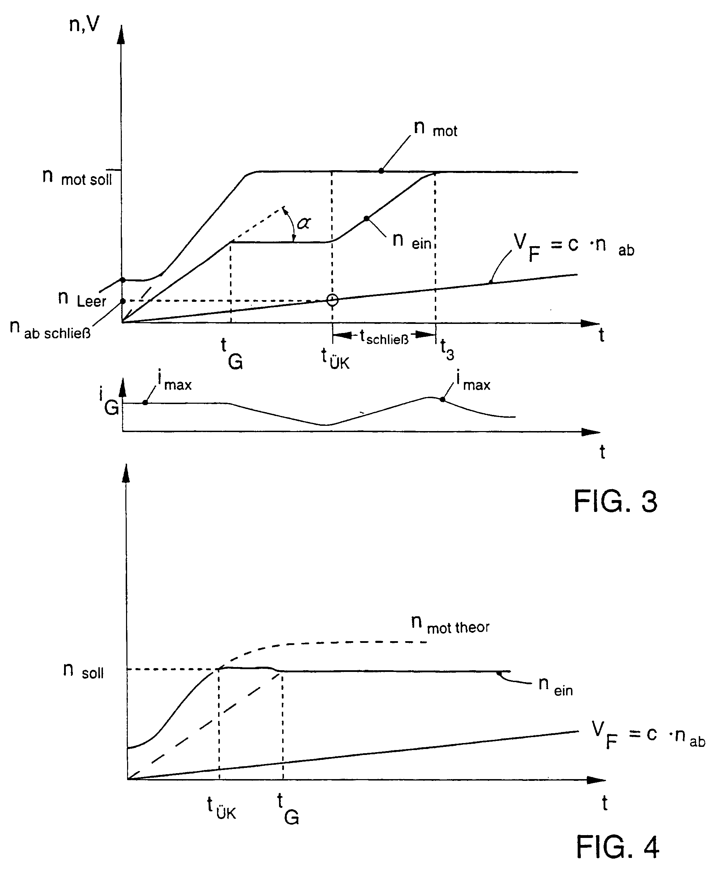

Figur 3 zeigt das Verfahren, wobei in dem oberen Diagramm von Figur 3 wie in den Figuren 1 und 2 auf der Ordinate Drehzahl bzw. Fahrzeuggeschwindigkeiten aufgezeichnet sind, während die Abszisse die Zeitachse darstellt. Zusätzlich ist in einer mit der gleichen Abszisse versehenen Darstellung das Übersetzungsverhältnis $i_G$ über der Zeit aufgetragen. Dabei bedeuten hohe Zahlenwerte kurze Übersetzungsverhältnisse, das kürzeste, einzustellende Übersetzungsverhältnis wird als $i_{max}$ bezeichnet. Beim Beschleunigen des Fahrzeuges dreht der Motor aus der Leerlaufdrehzahl $n_{leer}$ in bekannter Weise hoch, wobei die Fahrzeuggeschwindigkeit $V_F$ bis zu einem Zeitpunkt $t_G$ bei kontantem

Getriebeübersetzungsverhältnis $i_G = i_{max}$ kontinuierlich ansteigt. Zum Zeitpunkt $t_G$ erreicht der Motor die Solldrehzahl $n_{motsoll}$. Nun wird das Getriebe in Richtung auf längere Übersetzungsverhältnisse verstellt, so daß trotz kontinuierlich weiter ansteigender Fahrzeuggeschwindigkeit $V_F$ und damit ansteigender Getriebeabtriebsdrehzahl $n_{ab}$ die Getriebeeingangsdrehzahl $n_{ein}$ und aufgrund des gleichbleibenden Schlupfes damit auch die Motordrehzahl $n_{mot}$ konstant bleibt.

Die Motordrehzahl bleibt während dieses Zeitraumes konstant, wobei sie um den Schlupf $n_{schlupf} = n_{mot} - n_{ein}$ über der Getriebeeingangsdrehzahl $n_{ein}$ liegt, die mit der Abtriebsdrehzahl des hydrodynamischen Drehmomentwandlers identisch ist.

Zum Zeitpunkt $t_{ÜK}$ erreicht die Getriebeabtriebsdrehzahl $n_{ab}$ einen Wert, der sich bestimmen läßt, wenn man den Gradienten $dn_{ab}/dt$ kennt oder zumindest schätzen kann. Als Schätzung kann der Winkel in Figur 3 herangezogen werden. Nimmt man an, daß diese Steigung konstant bleibt, so läßt sich aus der Beziehung

$$n_{soll} < \left( n_{abschließ} + \frac{dn_{ab}}{dt} + t_{schließ} \right) * i_{max}$$

diejenige Drehzahl der Getriebeabtriebswelle $n_{abschließ}$ bestimmen, bei der begonnen werden muß, die Überbrückungskupplung zu schließen, so daß nach Ablauf der Zeit $t_{schließ}$ zum Zeitpunkt $t_3$ gerade wieder die kürzeste Getriebeübersetzung $i_{max}$ vorliegt.

Zwischen den Zeitpunkten $t_{ÜK}$ und dem Zeitpunkt $t_3$, zu dem die Überbrückungskupplung vollständig geschlossen ist, wird die Getriebeübersetzung gemäß Figur 3 von einem vergleichsweise langen Übersetzungsverhältnis wieder in Richtung auf das kürzeste Übersetzungsverhältnis $i_{max}$ verfahren, so daß, wie Figur 3 zeigt, die Getriebeeingangsdrehzahl $n_{ein}$ ansteigt, obwohl die Motordrehzahl $n_{mot}$ konstant bleibt.

Um die Verlustleistung der Antriebsanordnung möglichst gerin zu halten, soll angestrebt werden, daß der Zeitpunkt $t_3$ möglichst dicht am Schnittpunkt des mit der Steigung a versehenen Getriebeeingangsdrehzalverlaufs $n_{ein}$ mit der Sollmotordrehzahl $n_{motsoll}$ liegt. Dabei ist anzustreben, daß der Zeitraum $t_{schließ}$ möglichst kurz zu wählen ist.

Insgesamt läßt sich das Verfahren als Regelverfahren ausgestalten, wenn die Motordrehzahl $n_{mot}$ gemessen und das Übersetzungsverhältnis $i_G$ als Stellgröße verwendet wird.

Figur 4 zeigt, daß es Fälle geben kann, in denen die Motordrehzahl $n_{mottheor}$ den Sollwert einen Soll der Motordrehzahl zu übersteigen droht, obwohl dem durch Einstellen der längsten Getriebeübersetzung entgegengewirkt worden ist. In solchen Fällen kann die Überbrückungskupplung zum Zeitpunkt $t_{ÜK}$ bei eingestelltem längstem Getriebeübersetzungsverhältnis $i_{min}$ geschlossen werden, um durch Unterdrücken des Schlupfes des hydrodynamischen Drehmomentwandlers die Motordrehzahl $n_{mot}$ abzusenken und so zu verhindern, daß die Motordrehzahl über den gewünschten Wert $n_{soll}$ ansteigt.

Die Überbrückungskupplung kann zum Regeln der Motordrehzahl eingesetzt werden, indem der Kupplungsweg als Stellgröße verwendet wird und die Kupplung bei Abfallen der Drehzahl wieder etwas geöffnet, jedoch bei Überschreiten der Motorsolldrehzahl etwas geschlossen wird. Anschließend wird bei weiterem Beschleunigen die Getriebeübersetzung zum Zeitpunkt $t_G$ in Richtung lang verfahren

Da bei dem Verfahren gemäß Figur 3 das Gesamtübersetzungsverhältnis bei richtiger Wahl der Getriebeübersetzung während des Schließvorganges der Überbrückungskupplung durch den Schließvorgang nicht beeinflußt wird, d.h. keine Drehzahlsprünge und - bei Vernachlässigung des Wandlerwirkungsgrades im Verhältnis zum Getriebewirkungsgrades - auch keine Momentensprünge auftreten, kann die Kupplung schneller als bei herkömmlichen Verfahren geschlossen werden. Die in der Kupplung in Wärme umgesetzte Verlustleistung verringert sich daher durch Verkürzung der Schließzeit.

Außerdem kann vorgesehen sein, daß der Schlupf der Überbrückungskupplung geregelt wird, wenn ein Regeln der Übersetzung des Getriebes zur Aufrechterhaltung der Gesamtübersetzung nicht in außreichendem Maße möglich ist. Dabei wird die Getriebeübersetzung in Richtung höherer Übersetzungsverhältnisse gesteuert. Beim Öffnen der Überbrückungskupplung kann entsprechend mit inversem Steuerungscharakter die Getriebeübersetzung verändert werden.

## Patentansprüche

1. Steuer- oder Regelverfahren für ein stufenlos verstellbares Getriebe (12) (CVT) eines Kraftfahrzeuges mit einer Brennkraftmaschine (Motor), wobei das stufenlose Getriebe einen hydraulischen Drehmomentenwandler (10) mit einer Überbrückungskupplung (ÜK) aufweist, die bei höheren Fahrzeuggeschwindigkeiten ($v_F$) geschlossen wird, um die Leistungsverluste des Wandlers zu vermeiden, wobei während des Schließens der Überbrückungskupplung (ÜK) die sich dann wegen entfallenden Schlupfes ändernde Übersetzung (iw) des hydraulischen Wandlers kompensiert wird, indem die Übersetzung ($i_G$) des stufenlosen Getriebes (12) entsprechend in Richtung kürzerer Übersetzungsverhältnisse verstellt wird, **dadurch gekennzeichnet, daß** zusätzlich zu der Motordrehzahl als Regelgröße die Übersetzung des Getriebes als Stellgröße verwendet wird, um die Motordrehzahl auf eine vorgegebene Motorsolldrehzahl zu regeln, daß ausgehend von dem kürzesten Übersetzungsverhältnis ($i_{max}$) des stufenlosen Getriebes (12) diese Übersetzung während des Beschleunigens beibehalten wird, bis die Motordrehzahl eine Solldrehzahl ($n_{soll}$) erreicht, daß das Übersetzungsverhältnis ($i_G$) des stufenlosen Getriebes (12) dann kontinuierlich in Richtung auf längere Übersetzungsverhältnisse verfahren wird, so daß trotz steigender Getriebeabtriebsdrehzahl ($n_{ab}$) die Motordrehzahl ($n_{mot}$) im wesentlichen gleich bleibt, und daß dann beim Schließen der Überbrückungskupplung (ÜK) die Übersetzung ($i_G$) des stufenlosen Getriebes (12) stetig wieder in Richtung kürzerer Übersetzungsverhältnisse verfahren wird, so daß die Motordrehzahl unter Berücksichtigung des entfallenden Schlupfes ($n_{schlupf}$) des Wandlers (10) trotz steigender Getriebeabtriebsdrehzahl im wesentlichen konstant bleibt.

**2.** Steuerverfahren nach Anspruch 1, **dadurch gekennzeichnet, daß** die Übersetzung des stetig verstellbaren Getriebes (12) so verstellt wird, daß die Gesamtübersetzung ($i_{ges}$) von Motordrehzahl ($n_{mot}$) zu Getriebeabtriebsdrehzahl ($n_{ab}$) im wesentlichen gleich bleibt.

**3.** Regelverfahren nach Anspruch 1 oder 2, **dadurch gekennzeichnet, daß** zusätzlich zu der Motordrehzahl als Regelgröße die Getriebeeingangs- und die Getriebeabtriebsdrehzahl des stufenlosen Getriebes gemessen werden, daß aus der Motordrehzahl und der Getriebeeingangsdrehzahl der über dem hydraulischen Drehmomentwandler auftretende Schlupf berechnet wird, und daß die Getriebeübersetzung als Stellgröße im wesentlichen gemäß folgender Beziehung generiert wird:

$$i_G = \frac{\left(n_{soll} - \left(n_{mot} - n_{ein}\right)\right)}{n_{ab}}$$

**4.** Steuer- oder Regelverfahren nach einem oder mehreren der Ansprüche 1 bis 3, **dadurch gekennzeichnet, daß** die Überbrückungskupplung mit einer bekannten Zustellfunktion und demgemäß bekannter Schließzeit ($t_{schließ}$) geschlossen wird, und daß der Schließzeitpunkt ($t_{ÜK}$) im Hinblick auf ein am Ende des Schließvorganges vorgegebenes Übersetzungsverhältnis ($i_{max}$) des stufenlosen Getriebes gewählt wird.

**5.** Steuer- oder Regelverfahren nach Anspruch 4, **dadurch gekennzeichnet, daß** der Abtriebsdrehzahlgradient ($dn_{ab}/dt$) des stufenlosen Getriebes gemessen wird, und beim Beschleunigen des Kraftfahrzeuges eine Abtriebsdrehzahl ($n_{abschließ}$) bestimmt wird, bei der die Überbrückungskupplung bei bekannter Schließzeit ($t_{schließ}$) geschlossen werden soll, gemäß folgender Beziehung:

$$n_{soll} < \left(n_{abschließ} + \frac{dn_{ab}}{dt} * t_{schließ}\right) * i_{max}$$

**6.** Regel- oder Steuerverfahren nach einem oder mehreren der Ansprüche 4 oder 5, **dadurch gekennzeichnet, daß** bei der Bestimmung der Abtriebsdrehzahl ($n_{abschließ}$) des stufenlosen Getriebes, bei dem die Überbrückungskupplung zu schließen begonnen wird, eine Änderung des Abtriebsdrehzahlgradienten des stufenlosen Getriebes, und damit eine Änderung der Beschleunigung des Kraftfahrzeuges, berücksichtigt wird.

**7.** Steuer- oder Regelverfahren für ein stufenlos verstellbares Getriebe (CVT) eines Kraftfahrzeuges mit einer Brennkraftmaschine, wobei das stufenlose Getriebe einen hydraulischen Drehmomentwandler mit einer Überbrückungskupplung aufweist, die bei höheren Fahrzeuggeschwindigkeiten geschlossen wird, um die Leistungsverluste des Wandlers zu vermeiden, **dadurch gekennzeichnet, daß** der Zustellweg der Überbrückungskupplung als Stellgröße und die gemessene Motordrehzahl als Regelgröße verwendet wird und daß bei eingestellter längster Übersetzung des stufenlos verstellbaren Getriebes (12) die Überbrückungskupplung beim Beschleunigen des Kraftfahrzeuges teilweise oder ganz geschlossen wird, um ein Überschreiten einer Motordrehzahl ($n_{soll}$) zu vermeiden.

**8.** Steuer- oder Regelverfahren nach Anspruch 7, **dadurch gekennzeichnet, daß** die Überbrückungskupplung geöffnet wird, wenn die Motorsolldrehzahl bei eingestellter kürzester Getriebeübersetzung des stufenlosen Getriebes unterschritten wird.

9. Steuer- oder Regelverfahren nach einem oder mehrem der Ansprüche 1 bis 8, **dadurch gekennzeichnet, daß** der Schlupf der Überbrückungskupplung geregelt wird, wenn ein Regeln der Übersetzung des Getriebes zur Aufrechterhaltung der Gesamtübersetzung nicht in ausreichendem Maße möglich ist.

**Claims**

1. A control or regulating procedure for a continuously variable transmission (12) (CVT) of a motor vehicle having an internal combustion engine (engine), wherein the continuous transmission comprises a hydraulic torque converter (10) with a bridging clutch (ÜK) which is engaged at higher vehicle speeds ($v_F$) in order to avoid the power losses of the converter, wherein during the engagement of the bridging clutch (ÜK) the transmission ratio ($i_W$) of the hydraulic converter, which then changes due to the decreasing slip, is compensated for in that the transmission ratio ($i_G$) of the continuous transmission (12) is correspondingly shifted towards lower transmission ratios, **characterised in that** in addition to the engine speed as a regulating variable the transmission ratio of the transmission is used as a correcting variable in order to regulate the engine speed at a predetermined desired engine speed, that starting from the lowest transmission ratio ($i_{max}$) of the continuous transmission (12) this transmission ratio is maintained during acceleration until the engine speed reaches a desired speed ($n_{soll}$), that the transmission ratio ($i_G$) of the continuous transmission (12) is then continuously shifted towards higher transmission ratios, so that despite the increasing transmission output speed ($n_{ab}$) the engine speed ($n_{mot}$) remains substantially constant, and that when the bridging clutch (ÜK) is then engaged the transmission ratio ($i_G$) of the continuous transmission (12) is continuously shifted again towards lower transmission ratios so that taking into consideration the decreasing slip ($n_{schlupf}$) of the converter (10) the engine speed remains substantially constant despite the increasing transmission output speed.

2. A control procedure according to claim 1, **characterised in that** the transmission ratio of the continuously variable transmission (12) is adjusted so that the overall transmission ratio ($i_{ges}$) from the engine speed ($n_{mot}$) to the trans-mission output speed ($n_{ab}$) remains substantially constant.

3. A control procedure according to claim 1 or 2, **characterised in that** in addition to the engine speed as a regulating variable the transmission input speed and transmission output speed of the continuous transmission are measured, that the slip which occurs across the hydraulic torque converter is calculated from the engine speed and the transmission input speed, and that the transmission ratio of the transmission is generated as a correcting variable essentially according to the following relationship:

$$i_G = \frac{(n_{soll} - (n_{mot} - n_{ein}))}{n_{ab}}.$$

4. A control or regulating procedure according to any one of claims 1 to 3, **characterised in that** the bridging clutch is engaged with a known engagement function and accordingly with a known time of engagement ($t_{schließ}$), and the point in time of engagement ($t_{ÜK}$) is selected with regard to a predetermined transmission ratio ($i_{max}$) of the continuous transmission at the end of the engagement operation.

5. A control or regulating procedure according to claim 4, **characterised in that** the rate of change of the output speed ($dn_{ab}/dt$) of the continuous transmission is measured and when the motor vehicle is accelerating an output speed ($n_{abschließ}$) at which the bridging clutch is to be engaged for a known time of engagement ($t_{schließ}$) is determined according to the following relationship:

$$n_{soll} < \left( n_{abschließ} + \frac{dn_{ab}}{dt} * t_{schließ} \right) * i_{max}$$

6. A control or regulating procedure according to one or both of claims 4 or 5, **characterised in that** a change in the rate of change of the output speed of the continuous transmission, and thus a change in the acceleration of the motor vehicle, is taken into consideration for the determination of the output speed ($n_{abschließ}$) of the continuous transmission at which engagement of the bridging clutch commences.

7. A control or regulating procedure for a continuously variable transmission (CVT) of a motor vehicle having an internal combustion engine, wherein the continuous transmission comprises a hydraulic torque converter with a bridging clutch which is engaged at higher vehicle speeds in order to avoid the power losses of the converter, **characterised in that** the engagement travel of the bridging clutch is used as a correcting variable and the measured engine speed is used as a regulating variable, and that when the highest transmission ratio of the continuously variable transmission (12) is selected the bridging clutch is partially or completely engaged when the motor vehicle accelerates, in order to prevent an engine speed ($n_{soll}$) being exceeded.

8. A control or regulating procedure according to claim 7, **characterised in that** the bridging clutch is disengaged if the desired engine speed is not reached when the lowest transmission ratio of the continuous transmission is selected.

9. A control or regulating procedure according to one or more of claims 1 to 8, **characterised in that** the slip of the bridging clutch is regulated if it is not possible to regulate the transmission ratio of the transmission to a sufficient extent in order to maintain the overall transmission ratio.

## Revendications

1. Procédé de commande ou de régulation pour un variateur de vitesse réglable en continu (12) (CVT) d'un véhicule automobile comprenant un moteur à combustion interne (moteur), le variateur de vitesse continu comprenant un convertisseur de couple hydraulique (10) avec un embrayage de pontage (ÜK) que l'on ferme pour des vitesses plus élavées ($v_f$) du véhicule automobile en vue d'éviter les pertes de puissance du convertisseur, la démultiplication ($i_w$) du convertisseur hydraulique, qui varie lors de la fermeture de l'embrayage de pontage (ÜK) en raison de la disparition du glissement, étant alors compensée lors de cette fermeture par le fait que la démultiplication ($i_G$) du variateur de vitesse continu (12) est réglée dans le sens vers des rapports de démultiplication plus courts, **caractérisé en ce que** l'on utilise en plus de la vitesse de rotation du moteur en tant que grandeur de régulation, la démultiplication du variateur en tant que grandeur de réglage, en vue de réguler la vitesse de rotation du moteur à une valeur de consigne de vitesse de rotation du moteur, prescrite, **en ce qu'**à partir du rapport de démultiplication le plus court ($i_{max}$) du variateur de vitesse continu (12), on conserve cette démultiplication pendant l'accélération, jusqu'à ce que la vitesse de rotation du moteur atteigne une vitesse de rotation de consigne ($n_{soll}$), **en ce que** le rapport de démultiplication ($i_G$) du variateur de vitesse continu (12) est alors déplacé en continu vers des rapports de démultiplication plus longs, de sorte que malgré une augmentation de la vitesse de rotation de sortie ($n_{ab}$) du variateur, la vitesse de rotation du moteur ($n_{mot}$) reste sensiblement identique, et **en ce qu'**alors, lors de la fermeture de l'embrayage de pontage (ÜK), la démultiplication ($i_G$) du variateur de vitesse continu (12) est alors à nouveau déplacée en continu vers des rapports de démultiplication plus courts, de sorte que la vitesse de rotation du moteur, en tenant compte de la suppression du glissement ($n_{schlupf}$) du convertisseur (10), reste constante malgré une augmentation de la vitesse de rotation de sortie du variateur.

2. Procédé de commande selon la revendication 1, **caractérisé en ce que** la démultiplication du variateur de vitesse réglable en continu (12) est réglée de façon telle, que la démultiplication totale ($i_{ges}$) de la vitesse de rotation du moteur ($n_{mot}$) à la vitesse de rotation de sortie ($n_{ab}$) du variateur reste sensiblement identique.

3. Procédé de régulation selon la revendication 1 ou 2, **caractérisé en ce qu'**en supplément de la vitesse de rotation du moteur en tant que grandeur de régulation, on mesure la vitesse de rotation d'entrée de variateur et la vitesse de rotation de sortie de variateur du variateur de vitesse continu, **en ce qu'**à partir de la vitesse de rotation du moteur et de la vitesse de rotation d'entrée de variateur, on calcule le glissement apparaissant par l'intermédiaire du convertisseur de couple hydraulique, et **en ce que** l'on élabore la démultiplication du variateur en tant que grandeur de réglage, sensiblement selon la relation suivante :

$$i_G = \frac{(n_{soll} - (n_{mot} - n_{ein}))}{n_{ab}}.$$

4. Procédé de commande ou de régulation selon l'une ou plusieurs des revendications 1 à 3, **caractérisé en ce que** l'embrayage de pontage est fermé selon une fonction de fermeture connue et en conséquence avec un temps de fermeture (t$_{schließ}$) connu, et **en ce que** l'instant de fermeture (t$_{ÜK}$) est choisi dans l'optique d'un rapport de démultiplication (i$_{max}$) prescrit du variateur de vitesse continu, à la fin de l'opération de fermeture.

**5.** Procédé de commande ou de régulation selon la revendication 4, **caractérisé en ce qu'**on mesure le gradient de vitesse de rotation de sortie (dn$_{ab}$/dt) du variateur de vitesse continu, et lors de l'accélération du véhicule automobile, on détermine une vitesse de sortie (n$_{abschließ}$) pour laquelle l'embrayage de pontage doit être fermé pour un temps de fermeture (t$_{schließ}$) connu, conformément à la relation suivante :

$$n_{soll} < \left( n_{abschließ} + \frac{dn_{ab}}{dt} \cdot t_{schließ} \right) \cdot i_{max}$$

**6.** Procédé de commande ou de régulation selon l'une ou plusieurs des revendications 4 ou 5, **caractérisé en ce que** lors de la détermination de la vitesse de sortie (n$_{abschließ}$) du variateur de vitesse continu, pour laquelle on débute la fermeture de l'embrayage de pontage, on tient compte d'une variation du gradient de vitesse de rotation de sortie du variateur de vitesse continu, et ainsi d'une variation de l'accélération du véhicule automobile.

**7.** Procédé de commande ou de régulation pour un variateur de vitesse réglable en continu (CVT) d'un véhicule automobile comprenant un moteur à combustion interne, le variateur de vitesse continu comprenant un convertisseur de couple hydraulique avec un embrayage de pontage que l'on ferme pour des vitesses plus élevées du véhicule automobile en vue d'éviter les pertes de puissance du convertisseur, **caractérisé en ce que** l'on utilise la course de déplacement de l'embrayage de pontage en tant que grandeur de réglage et la vitesse de rotation du moteur mesurée en tant que grandeur de régulation, et **en ce que** pour une démultiplication la plus longue réglée du variateur de vitesse réglable en continu (12), on ferme partiellement ou totalement l'embrayage de pontage, lors de l'accélération du véhicule automobile, en vue d'empêcher un dépassement d'une vitesse de rotation (n$_{soll}$) du moteur.

**8.** Procédé de commande ou de régulation selon la revendication 7, **caractérisé en ce que** l'on ouvre l'embrayage de pontage lorsque l'on passe en-dessous de la vitesse de rotation de consigne du moteur, pour une démultiplication de variateur la plus courte réglée du variateur.

**9.** Procédé de commande ou de régulation selon l'une ou plusieurs des revendications 1 à 8, **caractérisé en ce que** l'on régule le glissement de l'embrayage de pontage lorsqu'une régulation de la démultiplication du variateur n'est pas possible dans une mesure suffisante pour conserver la démultiplication totale.

FIG. 1

FIG. 2

FIG. 3

FIG. 4

FIG. 5